# EUROPÄISCHE PATENTSCHRIFT

(11) **EP 0 620 456 B1**
(45) Veröffentlichungstag und Bekanntmachung des Hinweises auf die Patenterteilung: **07.04.1999**
(21) Anmeldenummer: 94103098.3
(22) Anmeldetag: 02.03.1994
(51) Int. Cl.: G02B 5/08

(54) **Hochreflektierender Silberspiegel**
High-reflective silver mirror
Miroir à argent à haute réflexion

(30) Priorität: 15.04.1993 CH 1139/93
(43) Veröffentlichungstag der Anmeldung: 19.10.1994
(73) Patentinhaber: BALZERS AKTIENGESELLSCHAFT, 9496 Balzers (LI)
(72) Erfinder: Hohenegger, Karl, FL-9496 Balzers (LI); Wierer, Peter, A-6400 Bludenz (AT)
(74) Vertreter: Troesch Scheidegger Werner AG

(56) Entgegenhaltungen:
- EP-A- 0 035 906
- WO-A-86/02775
- DE-A- 2 032 452
- DE-A- 4 104 735
- R KINGSLAKE 'Applied Optics and Optical Engineering, Vol III, pages 309-320', 1965, ACADEMIC PRESS INC., NEW YORK (USA)

## Beschreibung

Die vorliegende Erfindung betrifft einen hochreflektierenden Silberspiegel und im speziellen einen umweltbeständigen, über einen grossen Spektralbereich sehr hohe Reflexionswerte aufweisenden Silberspiegel.

Silber ist ein Material mit exzellenten optischen Eigenschaften. Verwendet wird es unter anderem zur Herstellung von hochreflektierenden Spiegeln und insbesondere zur Herstellung von Elementen, die die Sonnenenergietransmission regeln, wie Architekturglasbeschichtung, Wärmeschutzschicht, Automobilverglasung und dergleichen. Die Verwendung von Silber als optisches Dünnschichtmaterial ist z.B. im Buch "Thin-Film Optical Filters" von H.A. Macleod, Adam Hilger Ltd., Second Edition, ausführlich beschrieben. Leider besitzt Silber eine schlechte Umweltverträglichkeit, da es einerseits relativ weich ist und somit leicht mechanisch beschädigt werden kann, und andererseits tritt eine Verschlechterung der optischen Eigenschaften infolge von Korrosion ein, wenn der Silberspiegel ungeschützt der Umwelt oder speziellen Medien ausgesetzt wird. Dabei bildet sich beispielsweise Silbersulfid.

Aus diesem Grunde werden Silberschichten häufig in Schichtsysteme eingepackt, wobei die Materialwahl der übrigen Schichten einerseits durch die gewünschten optischen wie spektralen Eigenschaften bestimmt wird, sowie andererseits durch die Notwendigkeit, dass die Beständigkeit der Silberschicht gegenüber Umwelteinflüssen erhöht wird. Wesentlich ist aber auch die Berücksichtigung der Nukleationseigenschaften von Silber auf diesen Materialien.

Häufig werden Oxide, Zinksulfid, Nitride oder Metalle verwendet, um Silber einzupacken. Insbesondere Oxide werden wegen der optischen Eigenschaften und Ihrer Beständigkeit und auch der Härte wegen verwendet. Das Aufbringen der Oxidschicht kann aber schon eine Degradation des Silbers verursachen, weshalb im Stand der Technik Massnahmen vorgeschlagen worden sind, um dies zu vermeiden.

So schlägt beispielsweise die DE-OS-33 07 661 vor, die Silberschicht zunächst mit einer weiteren Metallschicht bestehend aus Aluminium, Titan, Tantal, Chrom, Mangan oder Zirkonium zu überdecken, auf welche weitere Metallschicht schliesslich eine Oxidschicht angeordnet wird, bestehend aus Indiumoxid, Zinnoxid, oder einem Mischoxid davon. Die DE-OS-35 43 178 schlägt einen Mehrschichtbelag vor, wo die Silberschicht wiederum durch eine weitere Metallschicht, bestehend aus Tantal, Wolfram, Nickel oder Eisen üerdeckt wird, welche weitere Metallschicht ihrerseits durch eine Oxidschicht überdeckt wird, wobei SnO, SiO₂, Al₂O₃, Ta₂O₅ oder ZrO₂ als Oxidschichten vorgeschlagen werden.

In analoger Art und Weise schlägt die US-PS 3 682 528 vor, die Silberschicht mit einer dünnen Nickelschicht zu überdecken, falls weitere Schichten aufzubringen sind.

Gemäss einer anderen Variante schlägt die DE 30 27 256 vor, mindestens eine unterstöchiometrische Oxidschicht auf das Silber aufzubringen, bestehend beispielsweise aus Titanoxid oder Titannitrid oder einem Gemisch davon.

Die DE-A-33 29 504 schlägt vor, die Silberschicht durch eine dielektrische Schicht zu überdecken, wobei sich die stoffliche Zusammensetzung im Bereich der Übergangsflächen allmählich und kontinuierlich ändert. Als dielektrische Schicht wird beispielsweise Titanoxid erwähnt.

Schliesslich schlägt die EP-A-0 035 906 eine Schichtkombination Dielektrikum / Metall (Silber)/ Dielektrikum vor, wobei für die Silberschicht eine Schichtdicke von 5 bis 30 nm vorgeschlagen wird. Durch die vorgeschlagene dünne Silberschicht wird eine hohe Transmission erreicht, d.h. mit anderen Worten die Reflexionswerte der vorgeschlagenen Schichtkombination sind relativ niedrig.

Die Aufgabe der vorliegenden Erfindung besteht darin, einen umweltbeständigen und über einen sehr grossen Spektralbereich sehr hohe Reflexionswerte aufweisenden Silberspiegel vorzuschlagen.

Erfindungsgemäss wird ein derartiger hochreflektierender Silberspiegel gemäss dem Wortlaut nach Anspruch 1 vorgeschlagen.

Ein hochreflektierender Silberspiegel umfasst mindestens eine auf einem Substrat angeordnete Silberschicht, welche durch eine Zinksulfidschicht überdeckt ist, wobei nun erfindungswesentlich zwischen der Silberschicht und der Zinksulfidschicht mindestens eine Zwischenschicht bzw. eine Barriereschicht eingefügt ist.

Als für die Barriere- bzw. Zwischenschicht geeignete Materialien haben sich die Oxide der Elemente Silizium, Aluminium, Magnesium, der Gruppen Vlb, Vb und IVb, sowie Scandium, Yttrium, Calcium, Strontium, Zink, Eisen, Indium, Zinn, Cer, Holmium sowie Oxide von Mischungen oder Legierungen dieser Elemente (insbesondere Indium-Zinn-Oxid), ferner Oxinitride der Elemente Ti, Ta, Zr, Si, Hf, Al sowie Fluoride der Elemente Magnesium, Barium, Strontium, Calcium, der Seltenen Erden und Blei erwiesen. Bei der Barriereschicht kann es sich um ein dielektrisches Material handeln.

Gemäss einer bevorzugten Ausführungsvariante wird für die Herstellung der Barriere- bzw. Zwischenschicht Magnesiumfluorid verwendet, wobei die Schichtdicke durch die gewünschte optische Funktion gegeben sein kann, im allgemeinen < 1µm, vorzugsweise aber < 100nm ist.

Gemäss einer weiteren Ausführungsvariante ist es auch möglich, zwei Barriere- bzw. Zwischenschichten vorzusehen, wobei die eine Barriere- bzw. Zwischenschicht ein Oxid ist und die andere ein Fluorid.

Erfindungsgemäss ist es auch wesentlich, zwischen dem Substrat und der Silberschicht mindestens eine weitere Zwischenschicht vorzusehen, wobei es sich wiederum hauptsächlich um eine Schutzschicht handelt. Diese weitere Zwischenschicht kann beispielsweise aus Zinksulfid bestehen. Für bestimmte Anwendungen kann es erforderlich sein, dass zusätzlich zu dieser Schicht weitere Schichten zwischen Substrat und Silberschicht eingefügt werden müssen, sei dies, um die Reflexion weiter zu verstärken (Anbringen von optischen Korrekturschichten z.B. bei sog. Rückflächenspiegeln) oder aber zwecks Anbringung von Haftvermittlungsschichten.

An erfindungsgemäss hergestellten umweltbeständigen Silberspiegeln bzw. Umlenkspiegeln für 45° Einfallswinkel wurden über einen sehr grossen Spektralbereich wie beispielsweise im Bereich von 400nm-12 500nm sehr hohe Reflexionswerte gemessen. Die Reflexionswerte betragen mehr als 96%. Im Wellenbereich von 500nm-600nm und für Wellenlängen > 1 200nm wurden gar Reflexionswerte ≥ 98% gemessen. Im Bereich von 2 500nm-12 500nm und von 20 000nm-50 000nm ergeben sich sogar Reflexionswerte > 98,5%. Diese Werte gelten für unpolarisiertes Licht.

Erfindungsgemässe Lösungen des hochreflektierenden Silberspiegels können den folgenden Schichtaufbau aufweisen mit Schichtdicken in den angegebenen Bereichen:
- Substrat:: z.B. Glas,
- Yttriumoxid: mit einer Schichtdicke von ca. 20nm-250nm (Y₂O₃) als Basisschicht für Zinksulfid,
- Zinksulfid: mit einer Schichtdicke von 20nm-200nm (ZnS) als Keimschicht für Silber,
- Silberspiegel: (Ag) ≥ 15nm,
- Magnesiumfluoridschicht: mit einer Schichtdicke von 5nm-200nm (MgF₂),
- Yttriumoxid: mit einer Schichtdicke von 5nm-100nm, wobei die beiden letztgenannten Schichten die Silberschicht vor Reaktionen mit Komponenten nachfolgender Schichten, beispielsweise Schwefel, schützen und als Spektralkorrekturschichten dienen,
- Zinksulfid: (ZnS) mit einer Schichtdicke von 5nm-500nm als äussere Schutzschicht mit den erforderlichen optischen Eigenschaften.

Derartig hergestellte erfindungsgemässe Spiegel erweisen sich als sehr umweltbeständig, und sie erfüllen die Anforderungen der MIL-C-13508C Vorschriften, welche eine genau definierte Abfolge von bestimmten Umwelttests beinhalten. Vor allem aber erweisen sich diese Spiegel als beständig gegenüber Schwefelwasserstoff (H₂S).

Zinksulfid ist als beständiges Material bekannt und erweist sich als günstige Unterlage für das Silber. Man darf aber das Zinksulfid auf keinen Fall auf das Silber aufbringen, da bei der Verdampfung des ZnS frei werdender Schwefel die Silberschicht angreift und dadurch das Verfahren unkontrollierbar wird. Dies führt zu einer merklichen Erniedrigung der Reflexion, vor allem im sichtbaren Spektralbereich bzw. Wellenlängenbereich.

Das Wesentliche der Erfindung besteht nun darin, dass die Silberschicht sozusagen gegen die darüberliegende Schutzschicht (ZnS) geschützt werden muss, wobei dies über eine Barriere- bzw. Zwischenschicht erfolgt. Die oben unter dem Stand der Technik geschilderten Lösungsansätze, die ein Einpacken der Silberschicht mit einer Metall- bzw. einer unterstöchiometrischen Oxidschicht vorschlagen, versagen, da sie in der Regel ein Erfüllen von optischen Spezifikationen nicht ermöglichen, auf jeden Fall nicht mit den sehr hohen Reflexionswerten, wie sie oben angeführt worden sind. Bei der Barriere- bzw. Zwischenschicht handelt es sich erfindungsgemäss um eine dünne Schicht eines Fluorides der Elemente Magnesium, Barium, Strontium, Calcium, der Seltenen Erden oder Blei oder aber, und überraschenderweise entgegen dem Stand der Technik, um eine dünne Oxidschicht der Elemente Silizium, Aluminium, Magnesium, der Gruppen VIb, Vb, IVb, sowie Scandium, Yttrium, Calcium, Strontium, Zink, Eisen, Indium, Zinn, Cer, Holmium sowie Oxide von Mischungen oder Legierungen dieser Elemente (insbesondere Indium-Zinn-Oxid), ferner Oxinitride der Elemente Ti, Ta, Zr, Si, Hf, Al. Insbesondere die Verwendung von Magnesiumfluorid als dünne Schicht über dem Silber ist nicht naheliegend, da beispielsweise im Stand der Technik, wie beispielsweise in der Literaturstelle von Macleod angeführt wird, dass gutes MgF₂ heiss appliziert werden muss, d.h. bei 250° C, wobei bei diesen Temperaturen in der Regel das Silber degradiert.

Erfindungsgemäss wird demgegenüber vorgeschlagen, beispielsweise das Magnesiumfluorid "kalt" zu applizieren, d.h. bei Temperaturen von ca. 80° C, und auch die Schichtdicke wird sehr dünn gewählt, wie beispielsweise 200nm. Die Applikation von Magnesiumfluorid erfolgt mit konventionell bekannten Methoden, wie beispielsweise mittels Schiffchenverdampfung oder Verdampfung mittels eines Elektronenstrahls oder auch mittels Sputterverfahrens.

Wesentlich ist auch, dass die über der Silberschicht liegenden Schichten praktisch absorptionsfrei sind, d.h. dielektrisch, damit die optischen Anforderungen eingehalten werden können.

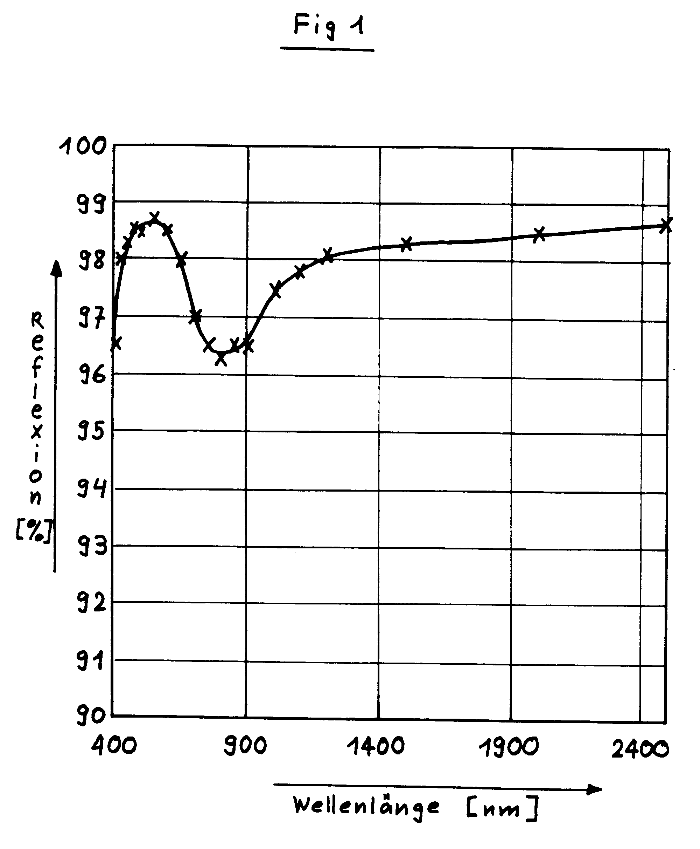

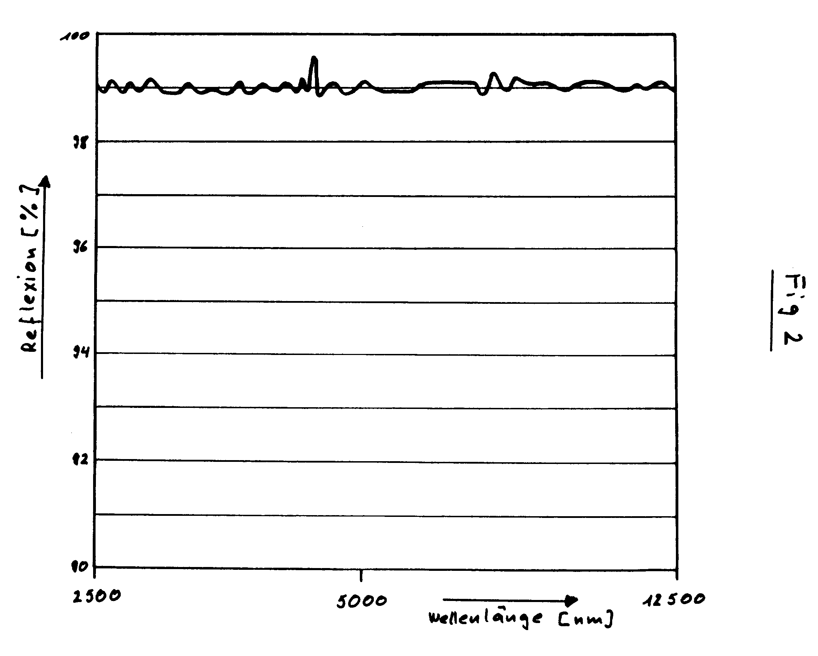

Die Erfindung wird nun anschliessend anhand eines konkreten Beispieles und von möglichen Schichtaufbauvarianten zusätzlich erläutert, wobei die Reflexion des beispielsweise aufgebauten Spiegels in Fig. 1 im Bereich 400nm-2 500nm und in Fig. 2 im Bereich 2 500nm-12 500 nm dargestellt ist.

Beispiel: Ein erfindungsgemäss aufgebauter hochreflektierender Silberspiegel weist den folgenden Schichtaufbau auf:

| Glassubstrat (Corning 7059) | |
|---|---|
| Yttriumoxid | ca. 140nm |
| Zinksulfid | 55nm |
| Silber | 120nm |
| Magnesiumfluorid | 55nm |
| Yttriumoxid | ca. 20nm |
| Zinksulfid | 40nm |

Alle Materialien werden in einer konventionellen Beschichtungsanlage mittels Verdampfen appliziert, wobei Zinksulfid aus einem Verdampferschiffchen verdampft wurde, die übrigen Materialien mittels eines Elektronenstrahlverdampfers. Es ist auch möglich, dass alle verwendeten Materialien entweder aus einem Schiffchen als auch mit einer Elektronenkanone verdampft werden.

In Fig. 1 sind die Reflektionswerte des beispielsweise aufgebauten Silberspiegels für 45° Einfallswinkel über den Spektralbereich von 400nm-2,500nm grafisch dargestellt. Dabei zeigt sich im Bereich zwischen 500nm und 600 nm ein Maximum mit ≥ 98% und ein Minimum im Bereich von 700nm-900nm mit Reflexionswerten zwischen 96% und 97%. Dieses Abfallen der Reflexionswerte im Bereich von 700nm-900nm ist eine Folge der spezifischen Auslegung des Schichtsystems (und könnte durch zusätzliche Schichten korrigiert werden).

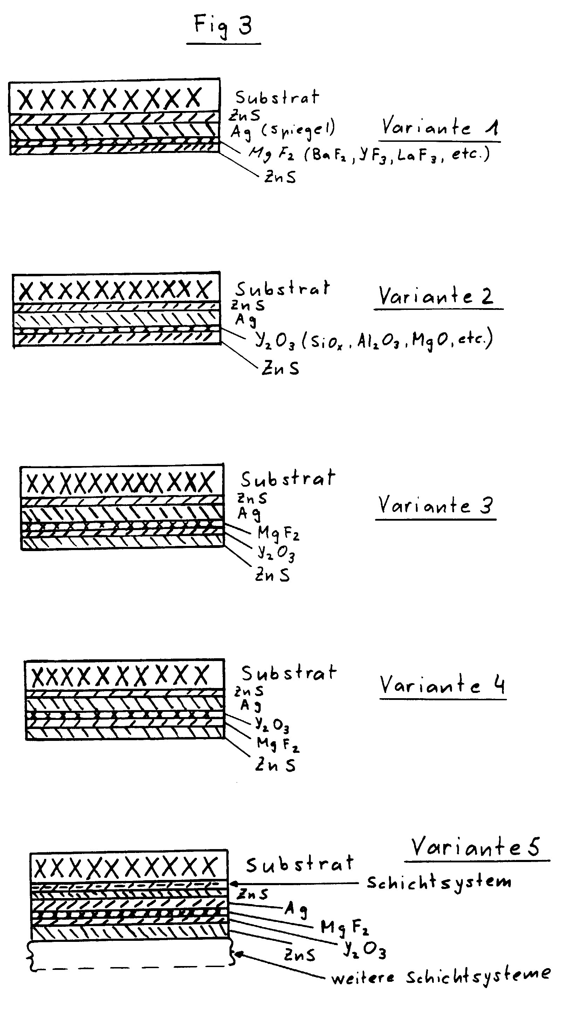

Nachfolgend werden nun noch einige mögliche Varianten eines erfindungsgemässen Schichtaufbaues angeführt, wobei diese Varianten in Fig. 3 schematisch und bildlich dargestellt sind.

### Variante 1:

Substrat
Zinksulfid als Keimschicht
Silber: Spiegel
Magnesiumfluorid (auch möglich Bariumfluorid, Yttriumfluorid, Lantanfluorid, Cerfluorid, Bleifluorid, etc.) als Zwischenschicht bzw. Barriere
Zinksulfid als äusserste Deckschicht

### Variante 2:

Substrat
Zinksulfid
Silber
Yttriumoxid (auch möglich Siliziumoxid SiOx, Aluminiumoxid, Magnesiumoxid, Hafniumoxid, Zirkoniumoxid, etc.)
Zinksulfid

### Variante 3:

Substrat
Zinksulfid
Silber
Magnesiumfluorid
Yttriumoxid
Zinksulfid

### Variante 4:

Substrat
Zinksulfid
Silber
Yttriumoxid
Magnesiumfluorid
Zinksulfid

### Variante 5:

Substrat
(beliebiges Schichtsystem)
Zinksulfid
Silber
Magnesiumfluorid
Indium-Zinn-Oxid
Zinksulfid

Auch ist es denkbar, dass zur Erzielung von bestimmten weiteren optischen Effekten (Korrekturen am spektralen Verlauf der Reflexion) den Varianten 1-4 weitere Schichtpakete angefügt werden, ggf. sogar eine der Varianten selbst.

Wohl ist es möglich, auf die zwischen Silber und dem Substrat angeordnete Zinksulfidschicht zu verzichten, doch hat es sich als äusserst vorteilhaft erwiesen, eine solche aufzubringen. Dies nicht zuletzt auch deshalb, da bei möglichen kleineren Defekten in der Silberschicht durch die darunter angeordnete Zinksulfidschicht verhindert wird, dass der Silberspiegel von seiner rückwärtigen Seite mittels des durch den Defekt hindurchtretenden korrosionsverursachenden Mediums weiter angegriffen wird.

Die Zinksulfidschicht als Unterlage der Silberschicht unterdrückt zudem Korrosion der Silberschicht vom Rand, insbesondere, wenn grössere, mit dem erfindungsgemässen Schichtsystem beschichtete Substrate vereinzelt werden müssen.

Die anhand der Beispiele und Ausführungsvarianten angeführten erfindungsgermässen Silberspiegel dienen nur der Erläuterung der vorliegenden Erfindung und sind selbstverständlich aufgrund der Definitionen in den Ansprüchen x-beliebig variierbar bzw. modifizierbar. Erfindungswesentlich ist, dass zwischen dem Silberspiegel und einer weiteren Schutzschicht eine Barriere- bzw. Zwischenschicht angeordnet ist, um einen zusätzlichen Schutz der Silberschicht zu ermöglichen, und auch um die hochreflektierenden Eigenschaften des Silberspiegels zu ermöglichen. Weiter ist es vorteilhaft, dass die Ag-Schicht auf einer Zinksulfidschicht aufgebracht wird.

## Patentansprüche

1. Hochreflektierender Silberspiegel, umfassend mindestens eine auf einem Substrat angeordnete, optisch hochreflektierende Silberschicht, welche durch eine Zinksulfidschicht überdeckt ist, wobei zwischen Silberschicht und Zinksulfidschicht mindestens eine Barriere bzw. Zwischenschicht eingefügt ist, die ein Oxid der Elemente Silizium, Aluminium, Magnesium, der Gruppen Vlb, Vb, IVb, sowie Scandium, Yttrium, Calcium, Strontium, Zink, Eisen, Indium, Zinn, Cer, Holmium oder ein Oxid von Mischungen oder Legierungen dieser Elemente, oder ein Oxinitrid der Elemente Ti, Ta, Zr, Si, Hf, Al oder ein Fluorid der Elemente Magnesium, Barium, Strontium, Calcium, der Seltenen Erden oder Blei umfasst, wobei die Silberschicht, die mindestens eine Barriere bzw. Zwischenschicht sowie die Zinksulfidschicht derart ausgewählt sind, so dass bei einem Lichteinfallswinkel von 45° und über ein Lichtspektrum von 400 nm bis 12 500 nm der Silberspiegel einen Reflexionswert aufweist von > 96 %.

2. Hochreflektierender Silberspiegel nach Anspruch 1, wobei die Barriere- bzw. Zwischenschicht aus einem dielektrischen Material besteht.

3. Hochreflektierender Silberspiegel nach Anspruch 1, wobei die Barriere bzw. Zwischenschicht aus Indium-Zinn-Oxid besteht.

4. Hochreflektierender Silberspiegel nach einem der Ansprüch 1 bis 3, wobei zwei Barriere- bzw. Zwischenschichten vorgesehen sind.

5. Silberspiegel nach Anspruch 4, wobei die eine Barriere- bzw. Zwischenschicht ein Oxid oder Oxinitrid und die andere ein Fluorid ist.

6. Silberspiegel nach Anspruch 4, wobei beide Barriereschichten aus unterschiedlichen Materialien desselben Typs wie Oxid, Oxintrid oder Fluorid sind.

7. Silberspiegel nach Anspruch 4, wobei jede der beiden Barriereschichten ein Oxinitrid desselben Elementes ist, jedoch unterschiedliche Atomverhältnisse Stickstoff zu Sauerstoff aufweisen.

8. Silberspiegel nach einem der Ansprüche 1 bis 7, wobei weitere Schichten angefügt werden.

9. Silberspiegel nach einem der Ansprüche 1 bis 8, wobei zwischen Substrat und Silberschicht mindestens eine weitere Zwischenschicht vorgesehen ist.

10. Silberspiegel nach Anspruch 9, wobei die mindestens eine weitere Zwischenschicht eine Zinksulfid- oder eine Yttriumoxidschicht ist.

11. Silberspiegel nach einem der Ansprüche 9 oder 10, wobei zwischen Substrat und der mindestens einen Zwischenschicht weitere Schichten eingefügt werden.

12. Verfahren zur Herstellung eines umweltbeständigen, über einen grossen Spektralbereich sehr hohe Reflexionswerte aufweisenden Silberspiegel nach einem der Ansprüche 1 bis 11, wobei das Substrat mittels Aufdampf- bzw. Verdampfungsverfahren bzw. Sputterverfahren mit der Silberschicht, und mit der Barriere- bzw. Zwischenschicht über der Silberschicht beschichtet wird, bevor eine äussere Zinksulfidschicht angeordnet wird.

13. Verfahren nach Anspruch 12, wobei das Beschichten der Silberschicht bei Temperaturen < als 100°C mittels einer dünnen Magnesiumfluoridschicht ausgeführt wird.

## Claims

1. High reflection silver mirror, comprising at least one optically highly reflective silver layer arranged on a substrate and covered by a zinc sulphide layer, where between the silver layer and the zinc sulphide layer is inserted at least one barrier or intermediate layer consisting of an oxide of the elements silicon, aluminium, magnesium, groups VIb, Vb, IVb, and scandium, yttrium, calcium, strontium, zinc, iron, indium, tin, cerium, holmium or an oxide of mixtures or alloys of these elements, or an oxinitride of the elements Ti, Ta, Zr, Si, Hf, Al or a fluoride of the elements magnesium, barium, strontium, calcium, the rare earths or lead, where the silver layer, the at least one barrier or intermediate layer and the zinc sulphide layer are selected such that at a light incidence angle of 45° and over a light spectrum from 400 nm to 12500 nm, the silver mirror has a reflection value of > 96%.

2. High reflection silver mirror according to claim 1, where the barrier or intermediate layer consists of a dielectric material.

3. High reflection silver mirror according to claim 1, where the barrier or intermediate layer consists of indium tin oxide.

4. High reflection silver layer according to any of claims 1 to 3, where two barrier or intermediate layers are provided.

5. Silver mirror according to claim 4, where the one barrier or intermediate layer is an oxide or oxinitride and the other a fluoride.

6. Silver mirror according to claim 4, where the two barrier layers are made from different materials of the same type such as oxide, oxinitride or fluoride.

7. Silver mirror according to claim 4, where each of the two barrier layers is an oxinitride of the same element, but have different atomic ratios of nitrogen to oxygen.

8. Silver mirror according to any of claims 1 to 7, where further layers are added.

9. Silver mirror according to any of claims 1 to 8, where at least one further intermediate layer is provided between the substrate and silver layer.

10. Silver mirror according to claim 9, where the at least one further intermediate layer is a zinc sulphide or yttrium oxide layer.

11. Silver mirror according to any of claims 9 or 10, where further layers are inserted between the substrate and the at least one intermediate layer.

12. Process for production of an environment-resistant silver mirror according to any of claims 1 to 11 with a very high reflection value over a broad spectrum range, where the substrate is coated by means of vacuum metallization or vaporisation processes or sputter processes with the silver layer and the barrier or intermediate layer over the silver layer, before an outer zinc sulphide layer is applied.

13. Process according to claim 12, where the silver layer coating is applied at temperatures < 100°C by means of a thin magnesium fluoride layer.

## Revendications

1. Miroir argenté à haute réflexion comportant au moins une couche d'argent à haute réflexion optique, disposée sur un substrat, qui est recouverte d'une couche de sulfure de zinc, étant précisé qu'il est prévu, entre la couche d'argent et la couche de sulfure de zinc, au moins une couche barrière ou couche intermédiaire qui comprend un oxyde des éléments silicium, aluminium, magnésium, des éléments des groupes VIb, Vb, IVb, et des éléments scandium, yttrium, calcium, strontium, zinc, fer, indium, étain, cérium, holmium, ou un oxyde de mélanges ou d'alliages de ces éléments, ou un oxynitrure des éléments Ti, Ta, Zr, Si, Hf, Al, ou un fluorure des éléments magnésium, baryum, strontium, calcium, terres rares ou plomb, et étant précisé que la couche d'argent, la ou les couches barrières ou couches intermédiaires et la couche de sulfure de zinc sont choisies de telle sorte qu'avec un angle d'incidence de la lumière de 45° et sur un spectre lumineux de 400 nm à 12500 nm, le miroir argenté présente une valeur de réflexion > 96 %.

2. Miroir argenté à haute réflexion selon la revendication 1, dans lequel la couche barrière ou couche intermédiaire se compose d'un matériau diélectrique.

3. Miroir argenté à haute réflexion selon la revendication 1, dans lequel la couche barrière ou couche intermédiaire se compose d'oxyde d'indium et d'étain.

4. Miroir argenté à haute réflexion selon l'une des revendications 1 à 3, dans lequel il est prévu deux couches barrières ou couches intermédiaires.

5. Miroir argenté selon la revendication 4, dans lequel une couche barrière ou couche intermédiaire se compose d'un oxyde ou d'un oxynitrure, et l'autre d'un fluorure.

6. Miroir argenté selon la revendication 4, dans lequel les deux couches barrières se composent de matériaux différents du même type, comme un oxyde, un oxynitrure ou un fluorure.

7. Miroir argenté selon la revendication 4, dans lequel les deux couches barrières se composent d'un oxynitrure du même élément, mais présentent des rapports atomiques azote/oxygène différents.

8. Miroir argenté selon l'une des revendications 1 à 7, dans lequel d'autres couches sont ajoutées.

9. Miroir argenté selon l'une des revendications 1 à 8, dans lequel au moins une autre couche intermédiaire est prévue entre le substrat et la couche d'argent.

10. Miroir argenté selon la revendication 9, dans lequel la ou les autres couches intermédiaires sont définies par une couche de sulfure de zinc ou d'oxyde d'yttrium.

11. Miroir argenté selon la revendication 9 ou 10, dans lequel d'autres couches sont insérées entre le substrat et la ou les autres couches intermédiaires.

12. Procédé pour fabriquer un miroir argenté résistant face à l'environnement et présentant des valeurs de réflexion très élevées sur une grande zone spectrale, selon l'une des revendications 1 à 11, selon lequel on recouvre le substrat avec la couche d'argent et la couche barrière ou couche intermédiaire, sur ladite couche d'argent, à l'aide d'un procédé de métallisation sous vide ou d'évaporation ou de pulvérisation cathodique avant de disposer une couche de sulfure de zinc extérieure.

13. Procédé selon la revendication 12, selon lequel on recouvre la couche d'argent à des températures < 100°C à l'aide d'une fine couche de fluorure de magnésium.
